(19) **Europäisches Patentamt**

**European Patent Office**

**Office européen des brevets**

(11) Veröffentlichungsnummer: **0 359 106**

**A2**

# (12) EUROPÄISCHE PATENTANMELDUNG

(21) Anmeldenummer: **89116427.9**

(22) Anmeldetag: **06.09.89**

(51) Int. Cl.⁵: **B29B 17/02 , B03B 9/06**

(30) Priorität: **12.09.88 DE 3831023**

(43) Veröffentlichungstag der Anmeldung:
**21.03.90 Patentblatt 90/12**

(84) Benannte Vertragsstaaten:
**AT BE CH DE ES FR GB GR IT LI NL SE**

(71) Anmelder: **HERBOLD GMBH Maschinenfabrik**
**Industriestrasse 23**
**D-6922 Meckesheim(DE)**

(72) Erfinder: **Beyer, Siegfried, Dipl. Ing.**
**Weimarer Strasse 17**
**D-6000 Frankfurt 56(DE)**

(54) **Verfahren zum Aufbereiten und Wiederverwenden verschmutzter Kunststoffprodukte.**

(57) Die Erfindung betrifft ein Verfahren zum Reinigen und Wiederverwenden verschmutzter Kunststoffprodukte.

In einem geschlossenen System werden Kunststoffschnitzel zunächst in einer Waschlösung gewaschen und sodann unterschiedliche Kunststoffe getrennt. Danach werden die wiederzuverwendenden Schnitzel in einer nachgeschalteten Stufe getrocknet. Das Austreten schädlicher Dämpfe wird vermieden und das Lösungsmittel nach einer Aufbereitung in den Kreislauf zurückgeführt.

**EP 0 359 106 A2**

# Verfahren zum Aufbereiten und Wiederverwenden verschmutzter Kunststoffprodukte

Die Erfindung betrifft ein Verfahren und eine Vorrichtung zum Aufbereiten und Wiederverwenden verschmutzter Kunststoffprodukte, die in einer Vorabscheidung von groben Fremdstoffen befreit und sodann zu extrudier- oder agglomerierfähigen Schnitzeln zerkleinert werden, die in einer Waschlösung mit größerem spezifischen Gewicht als dem der Schnitzelrohstoffe in kontinuierlichem Fluß gehalten, einer turbulenzfreien Zone zugeführt, dort entnommen, sowie einer mechanischen Vortrocknung und einer thermischen Nachtrocknung unterworfen werden.

Derartige Reinigungsverfahren werden wegen der Rohstoffverknappung und -verteuerung und im Bewustsein der Umweltbelastung und Umweltverschmutzung durchgeführt, um so zu verhindern, daß ein großer Teil des nach kurzem Verbrauchsweg und kurzer Verbrauchszeit verschmutzten Kunststoffabfalles als Müll auf Halde oder in einem Verbrennungsofen landet.

Bei der Produktion von beispielsweise Kunststofffolien und -bändern fallen saubere und trockene Schnitte und Verarbeitungsabfälle an, die nach Stoffart getrennt, ohne gesonderte vorherige Behandlung zerkleinert einem Extruder zu neuer Verarbeitung zugeführt werden können. Das Rückführen der Produktionsabfälle ist in der Fachwelt als Recycling bekannt. Diese Produktionsabfälle betragen etwa 10 % der neu ausgestoßenen Produkte. 90 % der Produktion gehen den Weg des Verbrauchs, bei Folien und Bändern vorzugsweise in die Verpackungsindustrie. Der Verbrauchsweg und die Verbrauchszeit sind verhältnismäßig kurz. Die benutzten Kunststoffprodukte sind teilweise sehr stark verschmutzt. Ein Verfahren zum Aufbereiten derartiger Produkte ist in der DE-PS 25 25 750 beschrieben.

Desweiteren sind Kunststofabfälle aufzubereiten, die nicht nur mit lose anhaftenden Teilen beschmutzt sind, sondern auch Klebstoffe, Fette od. dgl. aufweisen. So sind z.B. Getränkeflaschen aus Kunststoff mit Etiketten od.dgl. versehen, die mittels Haft- oder Schmelzkleber befestigt sind.

Der Erfindung liegt die Aufgabe zugrunde ein Reinigungsverfahren zu schaffen, mit dem Kunststoffe unterschiedlicher Dichte während des Waschens getrennt und gleichzeitig von auf dem Kunststoff vorhandenen Klebstoffen oder fetthaltigen Verunreinigungen od.dgl. mehr, gelöst werden.

Diese Aufgabe wird dadurch gelöst, daß die Schnitzel in einer gasdichten Wasch- und Trennstufe mit einer Waschlösung aus einem organischen Lösungs mittel behandelt und in einer nachgeschalteten, geschlossenen, gasdichten Trocknungsstufe durch Zentrifugalkraft vorgetrocknet und mittels eines heißen Gases thermisch nachgetrocknet werden, daß die getrockneten Schnitzel von den Lösungsmitteln getrennt und über eine gasdichte Schleuse ausgetragen werden, und daß die Lösungsmittel und die Lösungsmittel-Dämpfe nach einer Aufbereitung in den Kreislauf zurückgeführt werden.

Mit diesem Verfahren wird in einem geschlossenen System ein flüssiges Lösungsmittel mit unterschiedlicher Dichte und auf das zu reinigende Produkt angepaßten Lösungseigenschaften verwendet. Durch die richtige Auswahl der Dichte des Lösungsmittels können Kunststoffe im Schwimm-, Sink-Verfahren von anderen Kunststoffen oder Verunreinigungen getrennt werden, die bei Anwendung von Wasser als Waschlösung nicht trennbar wären. Als Lösungsmittel kann Per- oder Trichloräthylen eingesetzt werden.

Das erfindungsgemäße Verfahren verläuft so, daß in einer gasdichten Wasch- und Trennstufe der zu reinigende Kunststoff durch ein Rührwerk od.dgl. einer gewissen Turbulenz ausgesetzt wird und damit der Reinigungsvorgang eingeleitet und der Lösevorgang begünstigt wird. Materialien, die spezifisch schwerer als das Lösungsmittel sind, setzen sich ab und können ausgetragen werden. In einer nachgeschalteten turbulenzfreien Zone wird nachgewaschen und die schwimmenden Schnitzel mittels langsam laufender Paddel zum Austrag gefördert und über eine gasdichte Verbindung der gasdichten, mechanischen Vortrocknung zugeführt. Im Anschluß hieran werden die Schnitzel durch Beaufschlagung mit einem heißen Trägergas, vorzugsweise Luft, thermisch getrocknet. Vorteilhafterweise werden nicht brennbare Lösungsmittel verwendet. In Sonderfällen könnte auch beispielsweise Äthanol od.dgl. eingesetzt werden. Das Verfahren arbeitet in der Wasch- und Trennstufe und auch in der gesamten Trocknungsphase in einer geschlossenen, gasdichten Apparatur und gewährt damit ein größtmögliches Maß an Sicherheit gegenüber unkontrollierbar austretenden Dämpfen des Lösungsmittels. Im Anschluß an die Trocknungsstufen wird das Lösungsmittel und die Trocknungsluft aufbereitet, damit sie in der Wasch-Trennstufe und der Trocknungsstufe wieder eingesetzt werden können. Damit ist ein ständiger Kreislauf des Lösungsmittels und der Trocknungsluft ohne Umweltbelästigung gewährleistet.

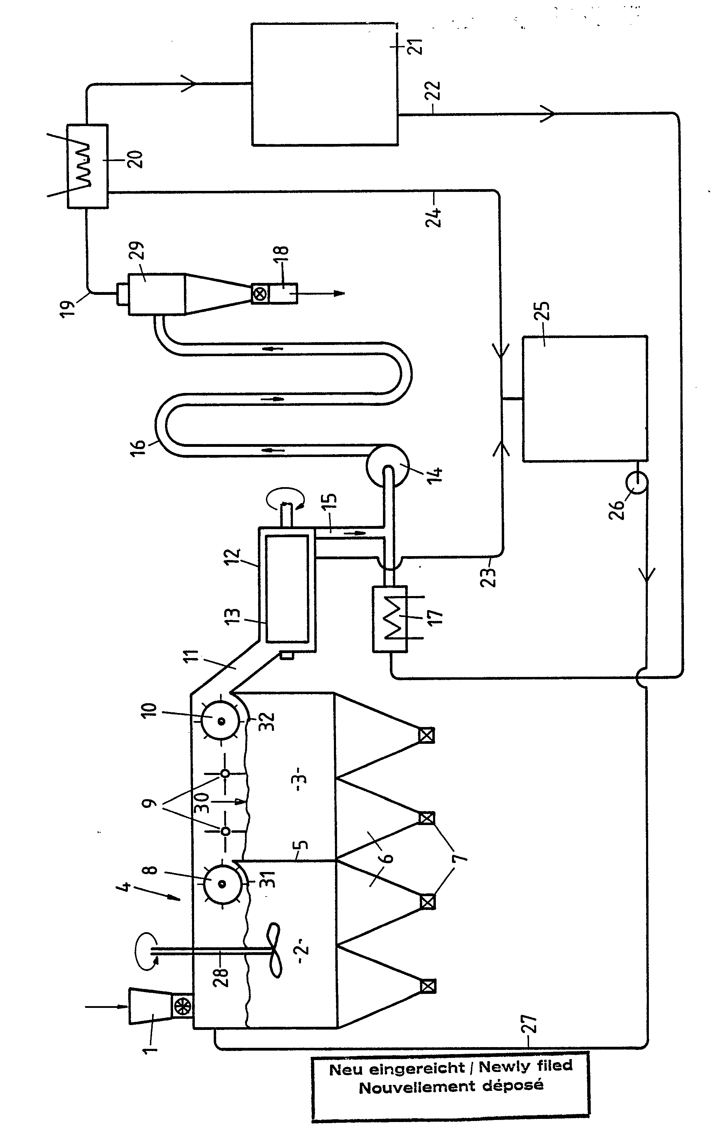

Ein Ausführungsbeispiel der Erfindung ist in der Zeichnung dargestellt und wird nachfolgend näher beschrieben.

Über eine gasdichte Eintrittsschleuse 1 werden die verunreinigten Kunststoffschnitzel in eine in zwei Zonen 2 und 3 unterteilte, mit dem Lösungsmittel gefüllte Wasch- und Trennstufe 4 eingeführt. Eine Trennwand 5 bildet die Zonen 2 + 3 innerhalb eines gemeinsamen Behälters. Jede der Zonen 2 + 3 ist mit einem oder mehreren Austragstrichtern 6 versehen, die Austragsvorrichtungen 7 aufweisen. Auch kann der Austrag der unlöslichen schweren Verunreinigungen z.B. über dicht an die Trichter 6 angeflanschte - nicht dargestellte - Behälter erfolgen. In Zone 2 ist ein Rührwerk 28 eingebaut, mit dem hohe Turbulenzen erzeugt und Auflösung und Ablösung von Verunreinigungen bewirkt werden. Im Bereich der Trennwand 5 ist, in Fließrichtung gesehen, davor eine Transportwalze 8 mit Leitblech 31 angeordnet, mit der die vorgereinigten Schnitzel in die turbulenzfreie Zone 2 transportiert werden. Hier sind langsam laufende Transportpaddel 9 vorgesehen, mit denen die schwimmenden Schnitzel an der Oberfläche 30 der Waschlösung langsam einer Austragswalze 10 mit Leitblech 32 zugeführt werden. In der turbulenzfreien Zone 2 wird eine sehr gute Trennung nach unterschiedlichem spezifischem Gewicht erreicht. Die Austragswalze 10 fördert die Schnitzel über eine gasdichte Verbindung 11 in eine gasdichte mechanische Vortrocknung 12. Diese kann eine Zentrifuge, ein Wirbelsieb oder eine rotierende Siebtrommel 13 sein. Aus dem mechanischen Trockner 12 gelangen die gereinigten, vorgetrockneten Schnitzel über eine Leitung 15 und einem Gebläse 14 in den thermischen als Strömungstrockner ausgebildeten Trockner 16. Die zur Trocknung erforderliche Luft wird in einem Wärmetauscher 17 aufgeheizt und ge langt über das Gebläse 14 in die Strömungsrohre des Trockners 16. Dem Trockner 16 ist ein Zyklon 29 nachgeschaltet, in dem die Schnitzel von den Lösungsmitteln und den Lösungsmittel-Dämpfen getrennt werden. Über eine gasdichte Schleuse 18 werden die trocknen und gereinigten Schnitzel ausgetragen. Die Lösungsmittel-Dämpfe gelangen über eine Leitung 19 in einen Kondensator 20, werden dort durch Abkühlung niedergeschlagen und dann noch in einer nachgeschalteten Adsorberstufe 21 von Rest-Dämpfen befreit. Die gereinigten Gase, einschließlich der zur Trocknung der Schnitzel erforderlichen Luft werden über eine Leitung 22 in den Wärmetauscher 17 zurückgeführt. Das im mechanischen Trockner 12 und im Kondensator 20 anfallende, verschmutzte Lösungsmittel wird über Leitungen 23 und 24 einer Destillation 25 zugeführt und dort gereinigt und über eine Pumpe 26 und Leitung 27 im Kreislauf wieder in die Wasch- und Trennstufe 4 eingegeben.

## Ansprüche

1. Verfahren zum Aufbereiten und Wiederverwenden verschmutzter Kunststoffprodukte, die in einer Vorabscheidung von groben Fremdstoffen befreit und sodann zu extrudier- oder agglomerierfähigen Schnitzeln zerkleinert werden, die in einer Waschlösung mit größerem spezifischem Gewicht als dem der Schnitzelrohstoffe in kontinuierlichem Fluß gehalten, einer turbulenzfreien Zone zugeführt, dort entnommen, sowie einer mechanischen Vortrocknung und einer thermischen Nachtrocknung unterworfen werden, dadurch gekennzeichnet, daß die Schnitzel in einer gasdichten Wasch- und Trennstufe mit einer Waschlösung aus einem organischen Lösungsmittel behandelt und in einer nachgeschalteten, geschlossenen, gasdichten Trocknungsstufe durch Zentrifugalkraft vorgetrocknet und mittels eines heißen Gases thermisch nachgetrocknet werden, daß die getrockneten Schnitzel von den Lösungsmitteln getrennt und über eine gasdichte Schleuse ausgetragen werden, und daß die Lösungsmittel und die Lösungsmittel-Dämpfe nach einer Aufbereitung in den Kreislauf zurückgeführt werden.

2. Verfahren nach Anspruch 1, dadurch gekennzeichnet, daß die Schnitzel in zwei getrennten Zonen sowohl gewaschen als auch von unterschiedlichen Kunststofen und Verunreinigungen getrennt werden.

3. Verfahren nach den Ansprüchen 1 und 2, dadurch gekennzeichnet, daß die Lösungsmittel-Dämpfe durch Abkühlung kondensiert und die kondensierten Dämpfe durch eine Adsorption von Rest-Dämpfen befreit und dann in den Kreislauf zurückgeführt werden.

4. Verfahren nach Anspruch 3, dadurch gekennzeichnet, daß die gereinigten gasförmigen Dämpfe als Trocknungsluft verwendet und über eine Wärmetauscherstufe in den Kreislauf geführt werden.

5. Verfahren nach Anspruch 1, dadurch gekennzeichnet, daß die in der mechanischen Vortrocknung und in der Kondensationsstufe anfallenden verschmutzten Lösungsmitteln in einer Destillationsstufe gereinigt werden.

6. Verfahren nach Anspruch 5, dadurch gekennzeichnet, daß die gereinigten Lösungsmittel in die Wasch- und Trennstufe zurückgeführt werden.

7. Verfahren nach den Ansprüchen 1 bis 6, dadurch gekennzeichnet, daß das Lösungsmittel Per- oder Trichloräthylen ist.

8. Vorrichtung zur Durchführung des Verfahrens nach den Ansprüchen 1 bis 7, dadurch gekennzeichnet, daß die gasdichte Wasch- und Trennstufe (4) eine gasdichte Eintrittsschleuse (1) für die Schnitzel aufweist und mittels einer Trennwand (5) in zwei Zonen (2 und 3) unterteilt ist, wobei in der Zone (1) ein hohe Turbulenzen erzeugendes Rührwerk (28) und in der Zone (2) langsam laufende Transportpaddeln (9) vorgesehen sind, und daß im Bereich der Trennwand (5) eine Transportwalze (8) und im Bereich des Austrags eine Austragswalze (10) vorgesehen ist.

9. Vorrichtung nach Anspruch 8, dadurch gekennzeichnet, daß die Wasch- und Trennstufe (4) über eine gasdichte Verbindung (11) mit der mechanischen Vortrocknung (12) verbunden ist.

10. Vorrichtung nach den Ansprüchen 8 und 9, dadurch gekennzeichnet, daß die die Lösungsmittel trennende Vorrichtung als ein Zyklon (29) ausgebildet ist und eine gasdichte Schleuse (18) zum Austrag der Schnitzel aufweist.

Neu eingereicht / Newly filed
Nouvellement déposé